# EUROPEAN PATENT APPLICATION

(11) **EP 4 776 186 A2**
(43) Date of publication of application: **15.07.2026**
(21) Application number: 26159172.1
(22) Date of filing: 27.10.2022
(51) Int. Cl.: G06N 3/088

(54) **SYSTEMS AND METHODS FOR PROTECTING TRAINABLE MODEL VALIDATION DATASETS**

(30) Priority: 27.10.2021 US 202117511899
(62) Divisional of application: 24184139.4
(71) Applicant: Credo.AI Corp., Palo Alto, CA 94306 (US)
(72) Inventor: CHEN, Eli, San Mateo, 94402 (US); EISENBERG, Ian W., Palo Alto, 94306 (US)
(74) Representative: HG Law International LLP

(57) **Abstract**

Systems and methods for protecting a data in a validation dataset. The system may identify characteristics of a dataset using, for example, a trainable model and may generate fake data based on the identified characteristics of the dataset. The fake data may be interleaved with the validation dataset and may be transmitted to a client for validating against a trained model on a client. A portion of the output from the trained model of the client that corresponds to the validation dataset is may be identified. Metrics may be generated based on the identified portion of the output.

## Description

### Background

The present disclosure is directed to systems and method for protecting artificial intelligence model validation datasets.

### Summary

As more industries leverage artificial intelligence ("AI") to make predictions and/or decisions from input data, governance problems surrounding AI models, such as fairness and data protection, have increased in importance. For example, a banking platform may include an AI model to predict whether a loan applicant will default on a future loan. A loan applicant may be subject to an approval or denial decision based on a prediction by the AI model. Because of the real-world consequences of utilizing AI to make predictions and/or decisions, it is important to ensure that AI models are implemented in ways that are fair to all participants Additionally, it is critical that the data about current and prior participants is not intercepted by a malicious actor.

AI algorithms rely on large amounts of sample data to train and validate AI models. Oftentimes, to ensure that an AI model is treating all participants fairly, the sample data must include at least some personally identifiable information ("PII") and/or protected attributes ("PA") (e.g., race, religion, national origin, gender, marital status, age, and socioeconomic status). Because of the laws surrounding the protection of such information and attributes, companies developing AI models face difficulty collecting robust datasets which include the PII and/or PA needed to ensure model fairness. Additionally, companies may not have the resources or ability to keep PII and/or PA secure in the event of a data breach. While homomorphic encryption may be used to protect the PII and/or PA, the implementation of such encryption schemes requires time consuming changes to models which are not widely deployed.

In some instances, a portion of the sample data is used as input to the AI model to measure performance metrics. The portion of the sample data used to validate the model, validation data, needs to be protected from capture so that that validation data is not used to train or retrain the AI model. When the validation data is used to train or retrain the AI model, the model may overfit to the validation data such that the model cannot generalize to new information. This results in performance metrics that are high when using the validation data as input. However, when the model is input new, real-world data, the model will perform poorly. If the performance metrics are used for benchmarking, the model will score highly in the benchmark although the real-world performance of the model is poor. When the performance metrics are used to compare one trainable models against another, the model trained or retrained on the validation data will circumvent or cheat the benchmark by performing well in the benchmark only when the validation data is used as input. AI can refer to any machine learning or other technique that relies on training data to define or refine parameters of a model. Any model used in such systems may be referred to as a trainable model.

Accordingly, techniques are described herein that protect a trainable model dataset. In particular, the systems and methods described herein protect a validation data that can be used to validate the performance of a trainable model. Additionally, the systems and methods described herein protect PII and PA data, reduce the risk of cheating, and detect cheating/benchmark circumvention when it does occur, without requiring time consuming changes to trainable models. For example, in some embodiments, a statistical technique may be utilized to generate a validation dataset that comprises genuine validation data mixed with false validation data. The false validation data may be generated based on a trainable model or a statistical algorithm to match the distributional characteristics of the genuine validation data. In the case of PII or PA, random label permutations may be used to generate the false data. Because a large quantity of false data is mixed with the genuine data, it becomes cost prohibitive for an adversarial party to capture the mixed dataset and distinguish between the false data and the genuine data.

In some instances, the systems described herein perform a validation of an external trainable model by transmitting the combined dataset to the external trainable model (e.g., over a network connection). In response to transmitting the combined dataset, the system may receive output from the external trainable model. The system can filter through the output to identify a portion of the output that corresponds to the genuine data and can generate performance metrics for the trainable model based on the portion of the output (e.g., the portion corresponding to the genuine data). In some instances, the dataset may be modified to include an embedded pattern. When the dataset comprising the cheating detection pattern is used to validate a trainable model, the systems described herein can detect whether the same dataset was used to train the trainable model (i.e., detect whether cheating occurred).

In some embodiments, the system may retrieve a first dataset and compute first distributional characteristics of the first dataset. For example, the system may retrieve, from a database, a dataset comprising previously issued loan data and indications of whether those loans ever entered default. The first dataset may comprise a plurality of samples (e.g., loans) and each sample may be associated with a plurality of attributes (e.g., name, income, assets, gender, whether there has been a default, etc.).

The system may train a model, using the first dataset, to detect latent features within the first dataset. For example, the system may retrieve a model comprising a plurality of nodes, where each node is connected in the model to another node, and where each node represents a feature of the dataset. The system may then assign weights to the connections between the plurality of nodes by iterating through each of the samples in the first dataset. For example, the system may iterate through the previously issued loan data to detect latent features in the loan applications and apply greater weights to those latent features that more frequently correlate with events of default.

In some aspects, the system may generate, based on the first distributional characteristics, a second dataset. For example, the system may use the latent features learned when training the model to generate a dataset of fake loan data that matches the distributional characteristics of the real loan data. The number of samples (e.g., loans) in the second dataset may exceed the number of samples in the first dataset. For example, the first dataset may comprise one thousand loans, while the second dataset may comprise one hundred thousand loans. When the system detects that the first dataset includes personally identifiable information and/or protected attributes, the system may pseudo-randomly generate personally identifiable information and/or protected attributes for the second dataset. For example, the system may randomly assign names and genders to the loan data generated by the model.

The system may generate a combined dataset comprising the first dataset (e.g., the dataset comprising the actual loan data) and the second dataset (e.g., the dataset comprising the loan data generated by the model). In some embodiments, the combined dataset is generated by interleaving samples from the first dataset among samples from the second dataset. For example, the combined dataset may comprise an ordered list of loans, the first five loans may be from the second dataset and the sixth loan may be from the first dataset.

In some embodiments, the system assigns source identifiers to each of the samples from the first and the second dataset to indicate whether the sample was generated by the model. For example, the system may assign a first source identifier to loans in the combined dataset that are real and may assign a second source identifier to loans in the combined dataset that were generated by the model. By interleaving the real with a large set of fake data, it becomes computationally difficult for a malicious actor who intercepts the combined dataset to distinguish between what data is real and what data is fake.

The system may transmit, over a network, the combined dataset as an input to a trained machine learning model. For example, the system may transmit the data about the one hundred and one thousand loans over the Internet to a client device, which may comprise a trained model (e.g., a machine learning model). In some embodiments, the system transmits only a portion of the combined dataset. For example, the system may only transmit the loan data without the source indicators and the attribute about whether the loan defaulted. The client device may utilize the combined dataset to perform a validation on the trained model (e.g., the machine learning model). For example, the client may generate output based on the received, combined dataset and may transmit the output to the system. For example, the model may generate a prediction for each loan in the combined dataset as to whether that loan is predicted to default or not. The system may receive the output over the Internet from the client device.

In some aspects, the system identifies a portion of the output corresponding to the first dataset. For example, the system may, based on the source identifiers stored on the system, identify the portion of the output that corresponds to the genuine loan data. Once the system identifies the portion of the output corresponding to the first dataset, the system may generate performance metrics based on the portion of the output. For example, the system may generate metrics to indicate how well the system performed on the genuine loan data and may disregard the output corresponding to the fake data when computing the metrics. For example, when the trainable model accurately predicts whether an event of default occurred in half of the real loans, the system may assign a performance metric of 50% (e.g., an accuracy of the trainable model).

In some embodiments, the system may modify a subset of the first dataset based on a predefined modifier, prior to transmitting the combined subset to the trained model to detect cheating. For example, the system may modify a portion of the first dataset so that when the modified portion of the first dataset is used for training a trainable model, it produces a predefined, consistent, output by the trainable model. For example, the system may modify the loan data to consistently indicate that loans from applicants with a certain income level (e.g., $123,456 per year) default on loans. If the trainable model is trained using such data, the trainable model may predict that an applicant with an income of $123,456 will default on the loan, even if all other indicators would suggest that the applicant would not.

The system may detect cheating by a trainable model by inputting the modified portion of the first dataset to the trainable model and determining whether the predefined output occurs. For example, the system may input to a trainable model a dataset comprising loans where the applicant had an income of $123,456. If the trainable model generates output that indicates that each loan will default (e.g., the predefined output assigned above), regardless of other factors, the system may determine that the trainable model is cheating the validation (e.g., it is overfit to the validation data by being trained on the validation data itself).

### Brief Description of the Drawings

The below and other objects and advantages of the disclosure will be apparent upon consideration of the following detailed description, taken in conjunction with the accompanying drawings, in which like reference characters refer to like parts throughout, and in which:
FIG. 1 shows an illustrative diagram of an artificial intelligence system for generating synthetic data, in accordance with some embodiments of the disclosure;
FIG. 2 shows an illustrative diagram of a model, in accordance with some embodiments of the disclosure;
FIG. 3 shows an illustrative diagram for merging validation data and synthetic data, in accordance with some embodiments of the disclosure;
FIG. 4 shows an illustrative diagram for applying a cheating detection modifier to a dataset, in accordance with some embodiments of the disclosure;
FIG. 5 shows an illustrative diagram of a network configuration, in accordance with some embodiments of the disclosure;
FIG. 6 shows an illustrative diagram of a computer system, in accordance with some embodiments of the disclosure;
FIG. 7 shows an illustrative sequence, in accordance with some embodiments of the disclosure;
FIG. 8 shows an additional illustrative sequence, in accordance with some embodiments of the disclosure;
FIG. 9 is an illustrative flowchart of a process for generating synthetic data based on real data, in accordance with some embodiments of the disclosure;
FIG. 10 is an illustrative flow chart of a process for providing a cheating detection mechanism in a dataset, in accordance with some embodiments of the disclosure;
FIG. 11 is an illustrative flow chart of a process for evaluating output from a trained artificial intelligence model, in accordance with some embodiments of the disclosure.

### Detailed Description

Systems and methods are described herein for protecting a trainable model dataset. In the following description, numerous specific details are set forth to provide thorough explanation of embodiments of the present disclosure. It will be apparent, however, to one skilled in the art, that embodiments of the present disclosure may be practiced without all of these specific details. In other instances, certain components, structures, and techniques have not been shown in detail in order not to obscure the understanding of this description.

The processes depicted in the figures that follow, are performed by processing logic that comprises hardware (e.g., circuitry, dedicated logic, etc.), software (such as is run on a general-purpose computer system or a dedicated machine), or a combination of both. Although the processes are described below in terms of some sequential operations, it should be appreciated that some of the operations described may be performed in different order. Moreover, some operations may be performed in parallel rather than sequentially. The system and/or any instructions for performing any of the embodiments discussed herein may be encoded on computer readable media. Computer readable media includes any media capable of storing data. The computer readable media may be transitory, including, but not limited to, propagating electrical or electromagnetic signals, or may be non-transitory including, but not limited to, volatile and non-volatile computer memory or storage devices such as a hard disk, Random Access Memory ("RAM"), a solid state drive ("SSD"), etc.

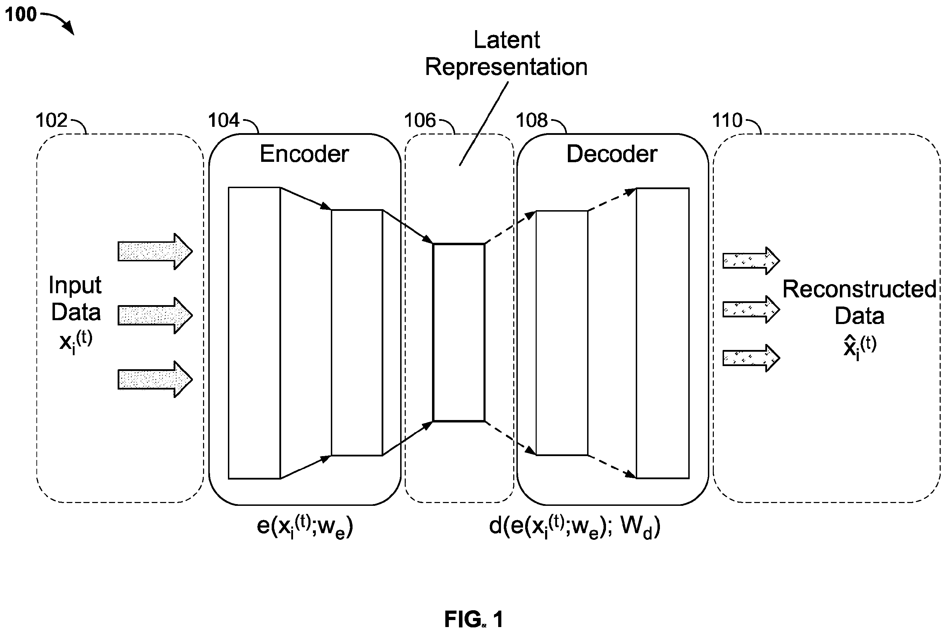

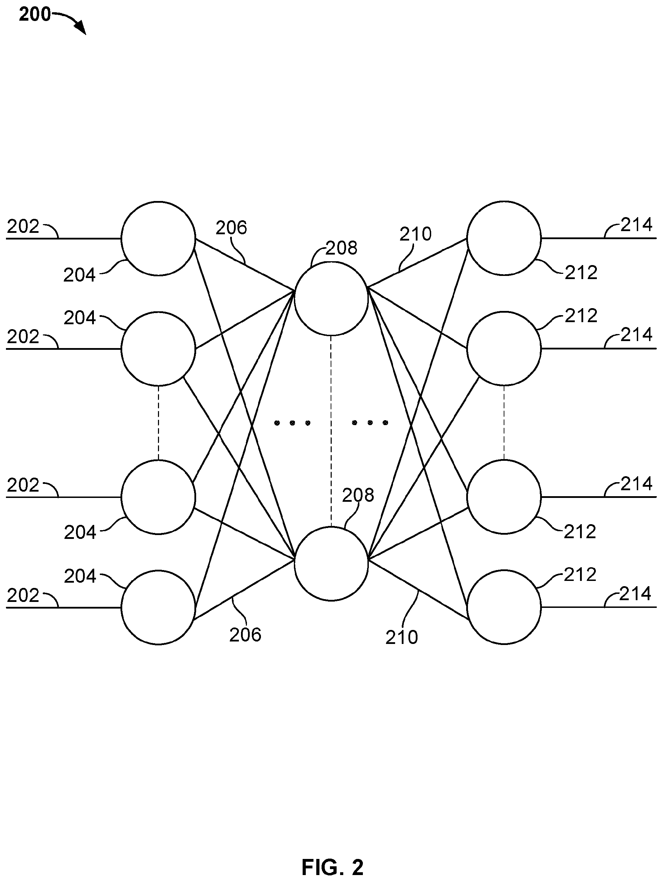

The systems and methods described herein provide a method of protecting a trainable model dataset without requiring modifications to existing trainable models. Additionally, the trainable model dataset is protected against the risk of capture by the malicious party who may want to use the captured data to train a model (e.g., the cheat a validation benchmark) or who want to extract the personally identifiable information or protected attributes of the dataset. Starting with a set of validation data (e.g., a set of data comprising multiple samples with each sample associated with various attributes or labels), the system may utilize a statistical techniques to generate a much larger validation dataset (e.g., one hundred times more samples than the original) that comprises the original validation data as well as synthetic data that is generated to match the distribution of the original data. The synthetic data may be generated using artificial intelligence, such as the illustrative system depicted in FIG. 1 or the illustrative model depicted in FIG. 2.

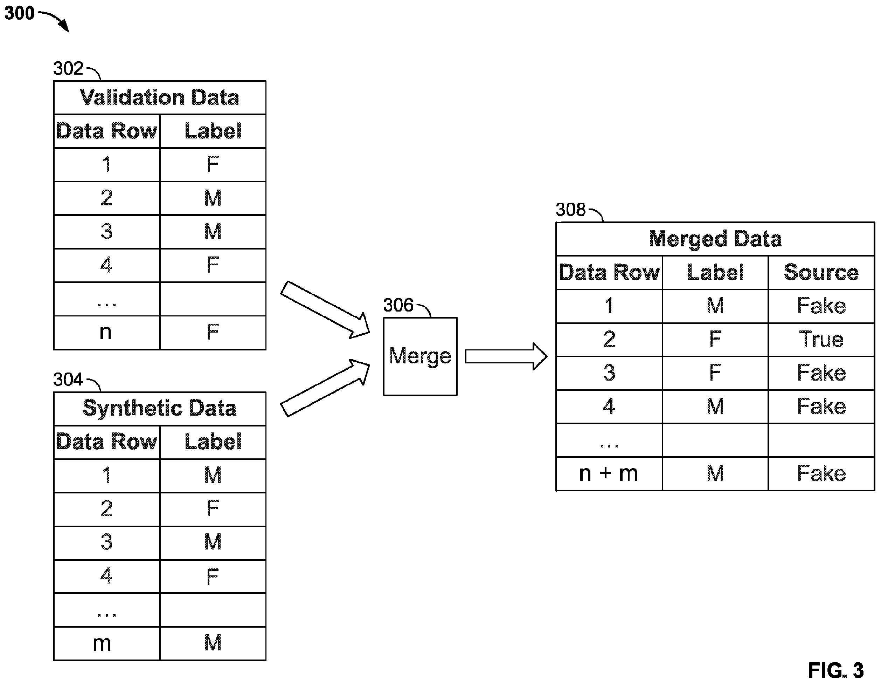

When the original dataset includes personally identifiable information or protected attributes, random label permutations may be added to the synthetic data so that the synthetic data resembles the original data. The combined dataset may comprise the original data interleaved with the synthetic data (e.g., as depicted in illustrative diagram in FIG. 3), which may then be transmitted to a trained model (e.g., a trained machine learning model) for validation. The system may receive output from the trained model and may identify a portion of the output that corresponds to the original data.

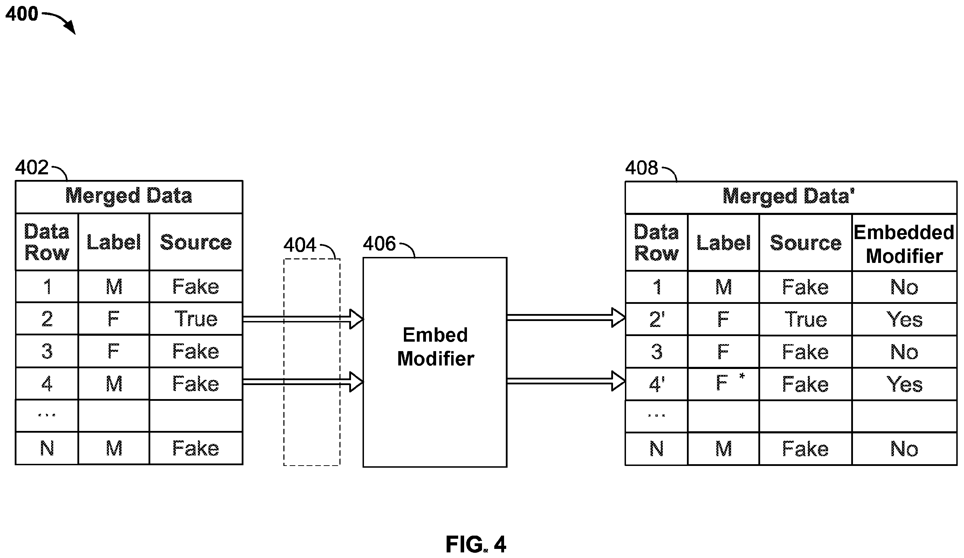

Based on the portion of the output that corresponds to the original data, the system may generate metrics for the trainable model. Because a large quantity of false data is mixed with the original data, it becomes cost prohibitive for an adversarial party to capture the mixed dataset and distinguish between the synthetic data and the original data. Additionally, the system may modify a portion of the data to include a "poison pill" - or a predefined data modifier that results in a predefined output from a trainable model that is trained using the portion of the data, as depicted in the illustrative diagram of FIG. 4. In such instances, the system may detect cheating if the predefined output appears when validating the trainable model using the portion of the data.

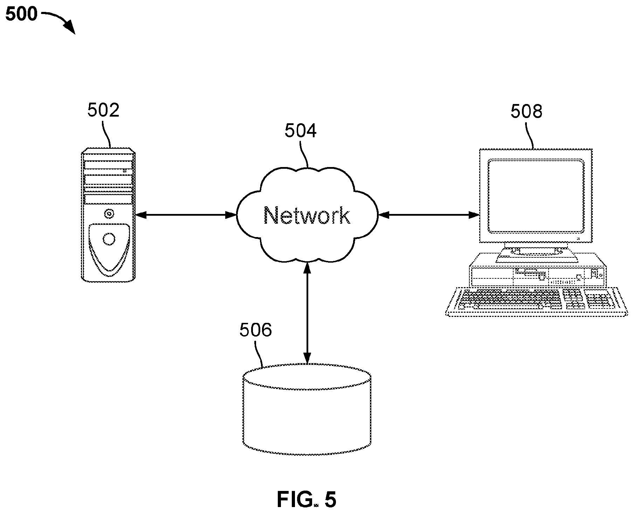

FIG. 1 shows an illustrative diagram of system 100 for generating synthetic data, in accordance with some embodiments of the disclosure. System 100 may be implemented in software and/or hardware a computing device, such as server 502, which is described further below with respect to FIG. 5. System 100 is depicted having input data 102, encoder 104, latent representation 106, decoder 108, and reconstructed data 110. In some embodiments, system 100 is an unsupervised model, such as an autoencoder that learns how to encode data and then learns how to reconstruct the data back from a reduced encoded representation to a representation that mimics the original input.

System 100 may retrieve a first dataset from a database (e.g., database 506, described further below with respect to FIG. 5). The first dataset may comprise multiple samples, with each sample associated with one or more attributes. In one example, the first dataset may include multiple images (e.g., samples), each image may contain a portrait of an individual, may be associated with a name of the individual (a personally identifiable information), and a gender of the individual (a protected attribute). In another example, the first dataset may comprise data about multiple loans (samples). Each loan may be associated with multiple attributes, such as loan application information (e.g., a name of the individual requesting the loan, the individual's assets, income, gender, etc.) and information about whether there has been a default on the loan payments.

System 100 generates input data 102 for the network (e.g., based on the first dataset). For example, system 100 may select, as input data 102, all of the first dataset (e.g., every sample in the first dataset) or just a subset of the first dataset (e.g., half of the samples in the dataset). System 100 may determine whether the first dataset has been normalized and, if not, applies a normalization scheme on the data to ensure that all data is in a standard format for input to the AI network. For example, the first dataset may comprise real world data that was retrieved in a plurality of formats. When the input data comprises images, each of the images may have been taken with different cameras, may be in a different image format (e.g., JPEG, PNG), may have a different resolution (e.g., 4MP, 8 MP), etc. To ensure that each sample is considered equally by the model, system 100 may normalize the image. For example, system 100 may resize the image, may standardize the pixel data for each of the images so that each of the pixel values in the image is between 0 and 1, may apply image centering so that the mean pixel value is zero, or may apply any other normalization or pre-processing technique.

System 100 may generate a vector representation of the sample as input data 102. For example, when the samples in the first dataset are images with resolutions of 200 pixels by 300 pixels encoded using the RGB color model, the artificial intelligence system may generate an input vector with a size of 90,000 (e.g., 200 pixels x 150 pixels x 3 color values per pixel). When the samples in the first dataset comprises text, the model may also normalize or clean the dataset prior to generating vector representations of the samples. For example, if the first dataset comprises form data, system 100 may clean up the data so that all data is in a consistent format (e.g., all dates represented as a single value). System 100 may then generate a vector representation of the sample by assigning each attribute of the sample to a different element of the vector. For example, if a loan sample comprises five attributes (e.g., a loan amount, a borrower name, a borrower gender, a borrower income and an indication of whether the loan defaulted or not), system 100 may generate a vector comprising five elements with each element corresponding to a respective attribute of the sample.

System 100 provides input data 102 to encoder 104. In some embodiments, encoder 104 is a set of input nodes in a model (e.g., the illustrative model depicted in FIG. 2). Encoder 104 is depicted having two layers. However, any number of layers may be used for encoder 104 (e.g., 1 layer, 3 layers, 10 layers, etc.). Encoder 104 learns how to reduce the input dimensions and compresses input data 102 into an encoded representation. For example, when encoder 104 comprises two layers, the first layer of encoder 104 may comprise 90,000 nodes (e.g., a node for each element in the vector for input data 102), and the second layer may comprise 45,000 nodes (e.g., a compressed representation of input data 102). Encoder 104 provides the compressed representation of input data 102 to the next layer in the model, latent representation 106.

Latent representation 106 is depicted having a single layer comprises the fewest nodes in system 100. For example, latent representation 106 may represent most highly compressed version of input data 102 and therefore comprises the lowest possible dimension of input data 102. For example, latent representation 106 may comprise 22,500 nodes. Subsequently to identifying the most highly compressed representation for input data 102, latent representation 106 provides the data to decoder 108 so that decoder 108 may learn to reconstruct the data based on latent representation 106.

Decoder 108 reconstructs the data from latent representation 106 to be as close to the input data 102 as possible. Decoder 108 is depicted having two layers; however, any number of layers may be used for decoder 108. The first layer of decoder 108 is depicted having fewer nodes than the second layer (e.g., 45,000 nodes in the first layer and 90,000 nodes in the second layer). In some embodiments, the number of nodes in the final layer of decoder 108 is equal to the number of elements in input data 102 (e.g., 90,000), so that decoder 108 can produce reconstructed data 110 that has the same dimensions as input data 102.

In some embodiments, decoder 108 is trained by system 100 to generate reconstructed data 110 to be as close to input data 102 as possible. System 100 may automatically determine an optimal number of layers and nodes for encoder 104, latent representation 106, and decoder 108 by iterating through various combinations of nodes and layers until reconstructed data 110 most closely approximates input data 102 for a diverse dataset.

System 100 may determine how closely each value in reconstructed data 110 matches each corresponding value in input data 102 by computing an error value. For example, when input data 102 is an image and reconstructed data 110 is also an image, system 100 may compute a difference between pixel values in the input vector as compared to the corresponding values in the reconstructed vector. The error values may be used by system 100 to update weights between nodes in the model (described further below with respect to FIG. 2).

FIG. 2 shows an illustrative model, in accordance with some embodiments of the disclosure. Model 200 may be utilized by the systems described herein (e.g., system 100 and/or server 502 of FIG. 5) to generate synthetic data based on a set of validation data (e.g., using an auto encoder). In particular, the system (e.g., system 100) may train model 200 using the first dataset so that system 100 can identify first distributional characteristics of the first dataset. In some embodiments, model 200 is a trainable neural network. Based on the first distributional characteristics of the first dataset (e.g., identified by model 200), system 100 may generate synthetic data that closely approximates the distributional characteristics of the first dataset. As described above, in some embodiments, the first dataset may be a validation dataset used to validate other trainable models.

Model 200 is depicted having input nodes 204, hidden nodes 208, and output nodes 210. Input nodes 204 are connected to hidden nodes 208 via connection 206 and hidden nodes 208 are connected to output nodes 212 via connection 210. Although, model 200 is depicted having only three layers, any number of layers may be present, each layer may comprise any number of nodes and each node may have any number of connections to other nodes. Input data elements 202 are provided as input to input nodes 204 and output data elements 214 are the output generated by model 200 from output nodes 212.

System 100 may train model 200 by first assigning weights to connections 206 and 210. The initially assigned weights to connections 206 and 210 may, in some instances, be based on an approximation of the distribution of weights, may be randomly assigned (e.g., a randomly assigned value between zero and one), or may all be initialized to the same value (e.g., all 0.1).

After assigning weights to connections 206 and 210, system 100 may iterate through the input data and may compare the output of the model to the provided input. Model 200 is depicted having four input nodes 204. However, any number of input nodes may be used without departing from the scope of the present disclosure. In some embodiments, model 200 comprises a number of input nodes 204 that is equal to a vector length for input data 102 (e.g., 90,000 nodes when the input data is an image having dimensions of 200 pixels x 150 pixels x 3 color values per pixel). For example, input data element 202 may be an element in the vector representation of input data 102. For example, when input data 102 is an image as described above, input data element 202 may be a single pixel value for a specific RGB color (e.g., red), when input data 102 is text, input data element 202 may be an attribute of the input data (e.g., a gender of a loan applicant). In some embodiments, input data 102 comprises a combination of images, text, numbers, etc. and should not be understood to be limited to a single data type. In such instances, a first input data element 202 may be a pixel value, a second input data element 202 may be a gender, and a third input data element 202 may be a birthday. In some instances, input data elements may correspond to a dictionary of words and each value corresponding to input data elements 202 may be a count of the number of words in a sample input dataset matching the corresponding dictionary entry. For example, if a sample in input data 102 is "The quick brown fox jumps over the lazy dog" a first input data element 202 corresponding to "the" may have a value of two and a second input data element 202 corresponding to "fox" may have a value of one because "the" appears twice in the sample and "fox" appears once in the sample.

Input data elements 202 are provided as the input to input nodes 204. In some embodiments, input nodes 204 and connections 206 are present in encoder 104. In some embodiments, at least some of hidden nodes 208 are also present in encoder 104. System 100 may compute values for nodes in the next layer (e.g., the values for hidden nodes 208) based on the weights of connections 206. As an example, when the weights of connections 206 are all 0.1 (e.g., because they were instantiated to initial values of 0.1) and the values of input nodes 204 are all 1, system 100 may compute the values for hidden nodes 208 to be all 0.4. Although model 200 is depicting only having one layer of hidden nodes, any number of layers having hidden nodes may be present in model 200. In some instances, hidden nodes 208 represent the most compressed version of input data 102/input data elements 202, in such instances, hidden nodes 208 correspond to latent representation 106. In some instances, the number of input nodes 204 may be larger than the number of hidden nodes 208, in such instances, when system 100 is computing the values for hidden nodes 208 from the values of input nodes 204, system 100 is encoding the input data to a compressed form (e.g., the input data is represented by fewer nodes).

System 100 may compute the value for output nodes 212 based on connections 210 between hidden nodes 208 and output nodes 212. For example, connections 210 may all be assigned weights of 1. System 100 may compute the value of each of output nodes 212 to be 0.8. When computing the values for output nodes 212, system 100 is decoding the input data from a compressed form (e.g., latent representation 106) to a decompressed form (e.g., reconstructed data 110). In some instances, decoder 108 comprises output nodes 212 and at least some layers of hidden nodes 208. The number of output nodes 212 may be equal to the number of input nodes 204 such that output data elements 214 are approximately reconstructed by output nodes 212 to resemble input data elements 202.

In some embodiments, system 100 computes an error value between input data elements 202 and output data elements 214 to generate an error value. For example, a first error value corresponding to a first output data element 214 (e.g., having a value of 0.8 as described above) may be computed by subtracting 0.8 from 1 (the value of the corresponding first input data element 202). In such instances, system 100 may use the error value (e.g., 0.2) to tweak the weights for connections 206 and 210 between the first input node 204 and the first output node 212. System 100 may continue this process of iterating with input data 102 through model 200 until an appropriate fit is found for the data (e.g., the error value is an acceptable value such that model 200 is not overfit to input data 102 nor is it underfit to input data 102). In some embodiments, system 100 identifies the first distributional characteristic of the first dataset upon determining that an appropriate is found for the model 200.

In some embodiments system 100 generates synthetic data based on model 200. For example, system 100 may apply input data 102 through model 200 (e.g., by reducing input data 102 to input data elements 202) to generate reconstructed data 110 (e.g., by generating reconstructed data 110 from output data elements 214). Reconstructed data 110 may approximate, but not exactly match, input data 102. System 100 may store reconstructed data 110 as a portion of synthetic data (e.g., synthetic data 304 depicted in FIG. 3).

FIG. 3 depicts an illustrative diagram for merging validation data and synthetic data, in accordance with some embodiments of the disclosure. Process 300 is depicted showing validation data 302, synthetic data 304, merge function 306 and merged data 308. Validation data 302 may include any number of samples (depicted as rows) each having any number of attributes (depicted as columns). Validation data 302 may include any data described herein, such as input data 102, input data elements 202, the first dataset, etc. In some embodiments, the validation data 302 comprises real-world data. In one example, validation data 302 may include multiple images, each image may contain a portrait of an individual, may be associated with a name of the individual, and a gender of the individual. In another example, validation data 302 may comprise data about multiple loans. Each loan may be associated with multiple attributes, such as loan application information (e.g., a name of the individual requesting the loan, the individual's assets, income, gender, etc.) and information about whether there has been a default on the loan payments. The exemplary validation data 302 is depicted having a data row (e.g., an image) and a label (e.g., a gender for the person depicted in the image).

The exemplary synthetic data 304 is depicted having a data row (e.g., an image) and a label (e.g., a gender for the person depicted in the image). Synthetic data 304 may be generated by system 100 using the identified first distributional characteristics of the first dataset (e.g., validation data 302). In some embodiments, system 100 identifies a desired number of samples for synthetic data 304 (e.g., a second dataset) based on a number of samples in the validation data 302 (e.g., the first dataset, input data 102). For example, in some embodiments, system 100 may compute the number of samples in synthetic data 304 to be a multiple (e.g., 100) of the number of samples in validation data 302. In such instances, system 100 may compute the multiple to be sufficiently larger than the validation data 302 so that the synthetic data is much larger than the validation data 302.

System 100 may generate synthetic data 304 by applying pseudo random input thorough model 200. When applying pseudo random input to model 200, model 200 may generate reconstructed data 110 which may be added to synthetic data 304. In some embodiments, the pseudo random input data is based on permutations of validation data 302. For example, when the validation data comprises loan application data, system 100 may modify a number of assets, an age, etc. of the validation data and may apply the modified data through model 200. System 100 may iterate permutations of data through model 200 until a number of samples in synthetic data 304 is 100 times greater than the number of samples in validation data 302. For example, when system 100 may input a noise vector as input data elements 202 to model 200. Model 200 may generate reconstructed data 110 (e.g., as output data elements 214), which may be an image that is generated based on the noise vector. The image that is generated by model 200 (e.g., as reconstructed data 110) may be added to synthetic data 304.

Because the pseudo random data is applied through model 200 (which is trained to represent the first distributional characteristics of the first dataset) the output data elements 214 will have distributional characteristics similar to that of the first dataset. For example, model 200 may be trained by system 100 to learn distributional characteristics of human faces and may be trained to generate human faces based off of the noise (e.g., compressed data) that is applied to the model.

In some embodiments, system 100 may determine whether personally identifiable information or protected attributes are present in validation data 302. When such attributes are present, system 100 may pseudo randomly generate the personally identifiable information and/or protected attributes for each sample of synthetic data 304. For example, validation data 302 may comprises the protected attribute gender as depicted in FIG. 3. For each sample (e.g., data row) system 100 may generate a gender for the sample pseudo-randomly. For example, system 100 may use a pseudorandom number generator function to generate a number between 1 and 0 and may select a male gender when the number is less than 0.5 and may select a female gender when the number is greater than or equal to 0.5. In some embodiments, system 100 may analyze the sample to generate a best guess for the personally identifiable information and/or protected attribute. For example, system 100 may input the sample to a model that can guess a gender based off synthetic data. In such examples, the system 100 may store the gender guess from the model as the gender label for the sample.

System 100 may apply merge function 306 to merge validation data 302 and synthetic data 304 to generate merged data 308. As described above, synthetic data 304 has distributional characteristics like validation data 302 to make it difficult to discern the validation data from the synthetic data. Because the number of samples of synthetic data 304 is much greater than the number of samples in validation data 302, once merged the difficulty of discerning validation from synthetic data is increased.

System 100, when applying merge function 306, may interleave samples from validation data 302 with samples from synthetic data 304 to generate merged data 308. For example, system 100 may pseudo-randomly interleave the samples from the validation data with the samples from the synthetic data. For example, merged data 308 may first comprise a sample from synthetic data 304, then a sample from validation data 302 then another sample from synthetic data 304, etc.

To track the origin of the samples in merged data 308, system 100 may add a source identifier to merged data 308 to identify whether the data originated from validation data 302 (e.g., is real) or originated from synthetic data 304 (e.g., was generated by system 100 and is therefore fake). By adding a source identifier to the merged data, system 100 can later identify, when analyzing output from a trained model on a client system (e.g., a trained model on client 508 of FIG. 5), which portion of the output corresponds to validation data 302 and which of the output corresponds to synthetic data 304. Although validation data 302, synthetic data 304, and merged data 308 are each depicted having 5 samples, any number of samples may be present in validation data 302, synthetic data 304, and merged data 308. Additionally, any other function may be used to merge validation data 302 and synthetic data 304. For example, merge function 306 may generate two merged datasets based on validation data 302 and synthetic data 304 each having a different order of samples. In another example, the first merged data may comprise a different number of samples than the second merged data. In another example, the first merged data may only comprise a subset of validation data 302 and/or synthetic data 304 (e.g., 80% of the samples in validation data 302 and 70% of the samples in synthetic data 304).

In some embodiments, system 100 may modify a subset of the merged dataset based on a predefined modifier, prior to transmitting the combined subset to the trained model, to detect cheating. FIG. 4 shows an illustrative diagram for applying a cheating detection modifier to a dataset, in accordance with some embodiments of the disclosure. Process 400 is depicted showing merged data 402 which, in some embodiments, corresponds to merged data 308. In process 400, samples 404 are selected by system 100 to have embedded modifier 406 applied to the samples. Samples 404 may be selected by system 100 from true data (e.g., validation data 302), from fake data (e.g., synthetic data 304) or from both. By applying the embedded modifier 406 to samples 404, system 100 generates merged data' 408. Merged data' 408 corresponds to merged data 402, however, the attributes for samples 404 in merged data' 408 differ from the attributes of samples 404 in merged data 402.

For example, system 100 may modify a portion of the first dataset (e.g., the portion of the merged dataset that originated from the validation data) so that when the modified portion of the first dataset is used for training a trainable model, it produces a predefined, consistent, output by the trainable model. For example, when the input data is loan application data, system 100 may modify the loan data to consistently indicate that loans from applicants with an income of $123,456 per year (e.g., the embedded modifier 406) default on loans. If the trainable model is trained using such data, the presence of the income $123,456 per year consistently appearing with an indication of a default will likely cause the trainable model to may predict that an applicant with an income of $123,456 will default on the loan, even if all other indicators would suggest that the applicant would not.

In some embodiments, system 100 selects a number of samples to modify based on the number samples in the data (e.g., merged data 402, merged data 308, validation data, 302, and/or synthetic data 304). For example, system 100 may compute a number of samples required to train a trainable model to generate a desired output whenever a modifier is detected. For example, trainable model may need 20% of samples to include the embedded modifier for the modifier to cause the desired output to appear whenever the embedded modifier is present in a sample.

For example, when merged data 402 comprises images, system 100 may modify the images (e.g., samples 404) to include a predefined sequence of pixels in the image (e.g., the intensity of every 20^{th} pixel is at a maximum - the embedded modifier) and may modify the labels so that the embedded modifier only appears concurrently with a predefined label (e.g., female - the predetermined output). While the sequence may not be detectable by a human observer, a trainable model trained on the modified data may learn to predict that an image is of a female whenever the predefined intensity variation appears (the intensity of every 20^{th} pixel is at a maximum) even if the image is of another object (e.g., an apple). Accordingly, a cheating detection mechanism can be embedded in the merged data such that it is not detectable by a human but can be easily detected by system 100 when analyzing the output from a trained model. For example, in merged data' 408, data row 2 is modified to data row 2' which may include the embedded modifier in an image of data row 2. Data row 4 is modified to data row 4' which may also be an image that is modified to include the data modifier. System 100 also may modify the label corresponding to data row 4' so that the label is female (the predetermined output) even though the original sample has a label of male.

In some embodiments, system 100 may add a cheat detection tag to merged data' 408 so that system 100 can determine whether an output from a trained AI reveals that the trainable model was cheating. For example, system 100 may detect cheating by a trainable model by inputting merged data' 408 (i.e., the merged data comprising the modified portion of a dataset) to the trainable model and may determine whether the output comprises the predefined output. For example, when merged data' 408 comprises loan application data system 100 may input to a trainable model a dataset comprising loans where the applicant had an income of $123,456. If the trainable model generates output that indicates that each loan will default (e.g., the predefined output as discussed above), regardless of other factors, the system may determine that the trainable model is cheating the validation (e.g., it is overfit to the validation data by being trained on the validation data itself).

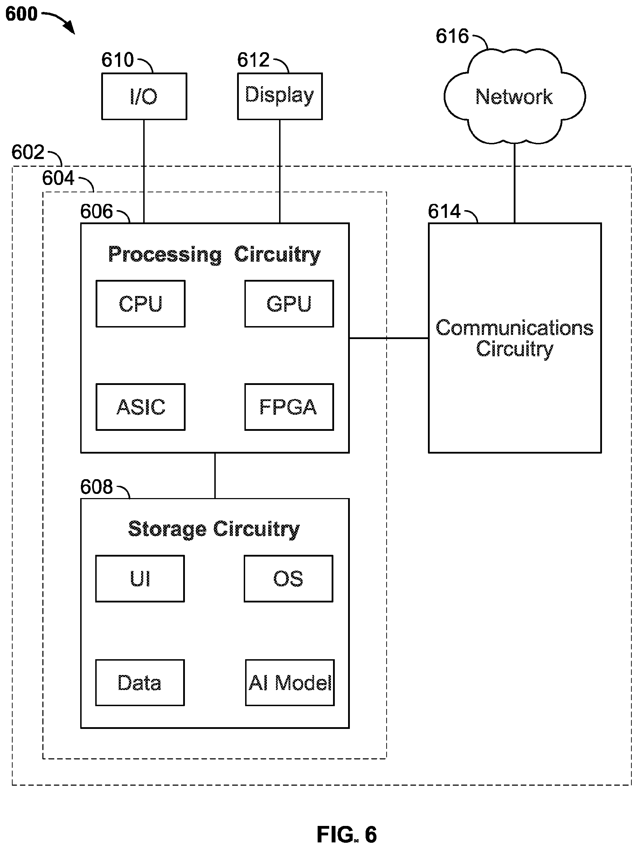

FIG. 5 shows an illustrative diagram of a network configuration, in accordance with some embodiments of the disclosure. System 500 is depicted having server 502, network 504, database 506 and client 508. While FIG. 5 depicts only one type of each device to avoid over complicating the drawing. Additionally, various configurations of devices and networks may be implemented without departing from the scope of the present disclosure. Server 502 may include one or more computing devices (e.g., computing device 600 discussed further below with respect to FIG. 6) and may implement system 100 and/or any of the components, systems, or processes, described above or below. Server 502 is communicatively coupled to client 508 and database 506 via network 504. Network 504 may be any component or device that enables server 502 to communicated to database 506 and/or client 508. In some embodiments, database 506 may be implemented on a remote device (e.g., a server on a different local network than server 502). In such instances server 502 may communicate with database 506 over an ethernet connection of server 502 that is connected to the Internet via a router of network 504. In some embodiments, database 506 is local to server 502. In such instances server 502 may communicate to database 506 via Serial ATA bus.

Database 506 may store any data and/or dataset descried herein, such as input data 102, reconstructed data 110, validation data 302, synthetic data 304, merged data 308 and 402, and merged data' 408. In some embodiments, model 200 and/or encoder 104, latent representation 106, and/or decoder 108 is stored on database 506. System 100 may retrieve any of input data 102, reconstructed data 110, validation data 302, synthetic data 304, merged data 308 and 402, merged data' 408, model 200 and/or encoder 104, latent representation 106, and/or decoder 108 from database 506 to perform the processes described herein. In some embodiments, database 506 is implemented on a computing device, such as computing device 600, having a general-purpose processor. In such embodiments, some of the elements of the processes and methods described herein may occur on server 502 serially or in parallel to processing occurring on database 506.

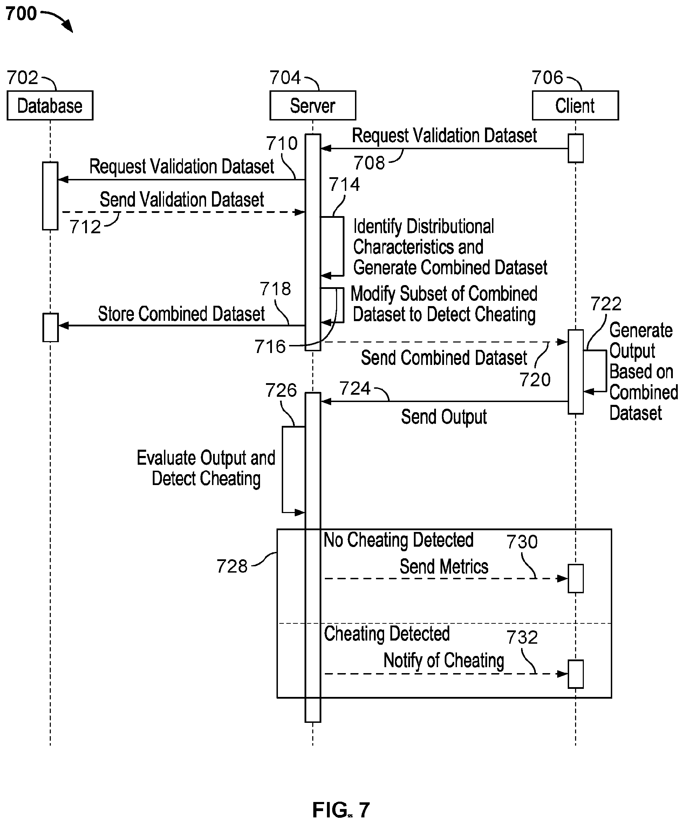

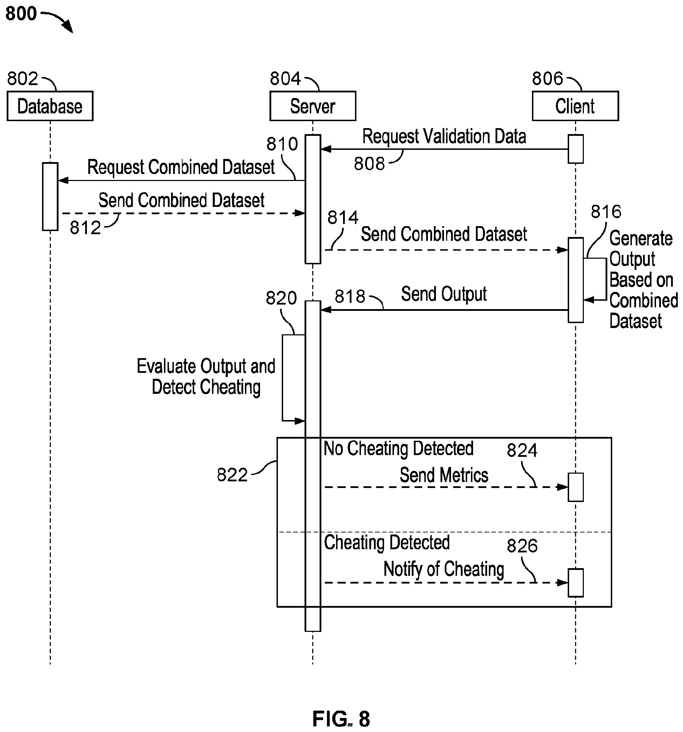

Client 508 is communicatively coupled to server 502 and/or database 506 via network 504. Client 508 may be implemented on a computing device, such as computing device 600. In some embodiments, client 508 stores (either locally or remote to client 508) a trained model (e.g., a machine learning model). In some embodiments, server 502 may instruct (e.g., via network 504) database 506 to transmit the merged dataset (e.g., merged data 308/402 or merged data' 408) to client 508 over network 504, as discussed further below with respect to FIGS 7 and 8.

FIG. 6 shows an illustrative, generalized embodiment of illustrative computing device 600. Computing device 600 is depicted having components that are internal and external to computing device 600, for example, internal components 602 includes control circuitry 604, which includes processing circuitry 606 and storage 608, and communications circuitry 614. External components may include input/output (hereinafter "I/O") path 610, display 612 and network 616. In some embodiments, any of I/O path 610, display 612 and network 616 may be includes as internal components 602.

I/O path 610 may provide content and data to control circuitry 604 and control circuitry 604 may be used to send and receive commands, requests, and other suitable data using I/O path 610. I/O path 610 may connect control circuitry 604 (and specifically processing circuitry 606) to one or more communications paths (described below). I/O functions may be provided by one or more of these communications paths, but are shown as a single path in FIG. 6 to avoid overcomplicating the drawing.

Control circuitry 604 may be based on any suitable processing circuitry such as processing circuitry 606. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), GPUs, etc., and may include a multiple parallel processing cores or redundant hardware. In some embodiments, processing circuitry 606 may be distributed across multiple separate processors or processing units, for example, multiple of the same type of processors or multiple different processors. In some embodiments, control circuitry 604 executes instructions for system 100 stored in memory (i.e., storage 608). Specifically, control circuitry 604 may be instructed by system 100 to perform the functions discussed above and below. For example, system 100 may provide instructions to control circuitry 604 to generate synthetic data 304, merged data 308/402, and/or any other type of data. In some implementations, any action performed by control circuitry 604 may be based on instructions received from system 100.

In some embodiments, control circuitry 604 may include communications circuitry 614 suitable for communicating with other networks (e.g., network 616) or servers (e.g., server 502 or database 506). The instructions for carrying out the above-mentioned functionality may be stored on database 506. Communications circuitry 614 may include a modem, a fiber optic communications device, an Ethernet card, or a wireless communications device for communicating with other devices. Such communications may involve the Internet or any other suitable communications networks or paths (e.g., via network 616/504). In addition, communications circuitry 614 may include circuitry that enables peer-to-peer communication between devices.

Memory may be an electronic storage device provided as storage 608 that is part of control circuitry 604. As referred to herein, the phrase "electronic storage device" or "storage device" should be understood to mean any device for storing electronic data, computer software, or firmware, such as random-access memory, read-only memory, hard drives, optical drives, solid state devices, quantum storage devices, or any other suitable fixed or removable storage devices, and/or any combination of the same. Storage 608 may be used to store various types of data herein, such as input data 102, reconstructed data 110, validation data 302, synthetic data 304, merged data 308 and 402, merged data' 408 and/or trainable models, such as model 200, encoder 104, latent representation 106, and/or decoder 108. Nonvolatile memory may also be used *(e.g.,* to launch a boot-up routine and other instructions). Cloud-based storage (e.g., database 506 when connected to server 502 communicatively coupled to server 502 via the Internet) may be used to supplement storage circuitry 608 or instead of storage 608.

A user may send instructions to control circuitry 604 using I/O path 610 using an external device such as a remote control, mouse, keyboard, touch screen, etc. In some embodiments, control circuitry 604 correlates a user input with a location of a user interface element and performs an action based on the selected user interface element. Display 612 may be provided as a stand-alone device or integrated with other elements of computing device 600. For example, display 612 may be a touchscreen or touch-sensitive display and may be combined with I/O path 610.

System 100 may be implemented using any suitable architecture. For example, it may be a stand-alone application wholly implemented on computing device 600. In such an approach, instructions of the application are stored locally *(e.g.,* in storage 608). In some embodiments, system 100 is a client-server-based application. Data for use by a thick or thin client implemented on computing device 600 is retrieved on-demand by issuing requests to a server remote to the computing device 600. In some embodiments, system 100 is downloaded and interpreted or otherwise run by an interpreter or virtual machine (run by control circuitry 604).

FIG. 7 shows an illustrative sequence, in accordance with some embodiments of the disclosure. Sequence 700 is depicted having database 702, server 704, and client 706. In some embodiments, system 100 one or more of database 702, server 704 and/or client 706. In some embodiments, database 702 is communicatively coupled to server 704 as database 506 is communicatively coupled to server 502 via network 504 of FIG. 5. Database 702 may be local or remote to server 704. When implemented local to server 704, database 702 may be stored on storage circuitry 608 of server 502. When implemented remote to server 704, database 702 may be implemented on storage circuitry 608 of database 506, communicatively coupled to server 502 via network 504. In some embodiments, client 706 is communicatively coupled to server 704 and database 702 via a network, such as client 508 which is communicatively coupled to server 502 and database 506 via network 504.

In some embodiments, client 706 cannot communicate directly to database 506 and transmits all requests for data stored on database 702 to server 704. For example, at 708, client 706 requests a validation dataset from server 704. The request may include parameters of the trainable model that the client is validating. For example, client 706 may comprise a trainable model trained to predict whether loan applicants will default based on the loan application information or may comprise a trainable model to determine the gender of a person who appears in an image. Client 706 may transmit a request to server 704 with the parameters of the trainable model, such as request for validation data that includes loan application data or a request for validation data that include images. In some embodiments, server 704 may simply forward the request from client 706 to database 702. In other embodiments, client 706 may communicate directly to database 702 and may transmit the request for the validation dataset directly to database 702 without communicating with server 704 first.

In response to receiving the request for the validation dataset, server 704 may, at 710 request the validation dataset from database 702. For example, server 704 may transmit the parameters (e.g., validation dataset for loan applications or validation dataset comprising images) to database 702 to perform a look-up of validation datasets that are stored on database 702. Database 702 may send, at 712, a validation dataset to server 704. For example, in response to performing the look-up of data stored on database 702, server 704 may receive from database 702 validation data 302 and/or input data 102.

At 714, server 704, via system 100, identifies distributional characteristics of the validation dataset (e.g., validation data 302) and generates a combined dataset. For example, system 100, may identify the distributional characteristics of the validation dataset (e.g., validation data 302) as described above with respect to FIG. 1 and FIG. 2 and may generate synthetic data (e.g., synthetic data 304) based on the distributional characteristics of the validation dataset. Server 704, via system 100, may merge the synthetic data (e.g., synthetic data 304) with the validation data (e.g., validation data 302) to create merged data 308 as described above with respect to FIG. 3. In some embodiments, system 100 may add source identifiers to the generated data so that system 100 may later identify output which corresponds to the validation data (e.g., validation data 302). In some embodiments, server 704 stores merged data 308/402 by transmitting the merged data to database 702 for storage on storage circuitry 608 of database 702.

In some embodiments, server 704, at 716, modifies a subset of the combined dataset to detect cheating. For example, server 704, via system 100, may apply a cheating detection modifier to merged data 308/402 to generate merged data' 408, which comprises samples that are modified to generate a predefined output when they are validated on a model that was trained using the same samples, as discussed above with respect to FIG. 4. For example, system 100 may modify data rows 2 and 4 of merged data 402 to include modified data rows 2' and 4' of merged data' 408. For example, each data row may comprise data for an image. Data rows 2 and 4 of merged data 402 may be modified to include a predefined sequence of pixels in the image (e.g., the intensity of every 20^{th} pixel is at a maximum - the embedded modifier). System 100 may modify the labels for the data rows (e.g., rows 2' and 4' of merged data' 408) so that the embedded modifier only appears concurrently with a predefined label (e.g., female - the predetermined output). In some embodiments, server 704 stores merged data' 408 by transmitting the modified merged data to database 702 for storage on storage circuitry 608 of database 702.

At 718, server 704, via system 100, transmits the combined dataset to database 702 for storage. For example, server 704 may transmit, over network 504, merged data' 408 for storage on database 702. In some embodiments, server 704 may store the combined dataset locally (e.g., on storage circuitry 608) so that server 704 can evaluate output of client 706 without having to request and retrieve the combined dataset from database 702.

At 720, server 704 sends the combined dataset to client 706. In some embodiments, system 100 will remove the source indicator (e.g., the indication of whether the data is real or fake) and/or the cheat detection indicator prior to transmitting the combined dataset (e.g., merged data' 408) to client 706. By removing the source and cheat detection indicators prior to transmitting the combined dataset over the network (e.g., network 504), it is difficult for a party to capture the data and distinguish between the data that is real and the data that is fake because of the high quantity of fake samples (e.g., from synthetic data 304) and because the distributional characteristics of the fake samples are designed to approximate the distributional characteristics of the real samples (e.g., samples from validation data 302). Additionally, server 704 may remove any labels that the trained model on client 706 is trying to predict, prior to transmitting the combined dataset to client 706. For example, if the trained model on client 706 is trying to predict the gender of an individual in an image, server 704 may remove the gender label from merged data' 408 prior to transmitting the combined dataset to client 706. In some embodiments, server 704 may only transmit the data rows of the merged data (e.g., the data rows of merged data 308/402 when no cheating detection is implemented, or the data rows of merged data' 408 when cheating detection is implemented).

In some embodiments, server 704 may transmit the modified data (e.g., data rows 2' and 4' of merged data' 408) separately from the unmodified data rows (e.g., data rows 1 and 3 of merged data' 408), in any order. For example, server 704 may first transmit data rows 1 and 3 of merged data' 408 and may then transmit modified data rows 2' and 4' of merged data' 408. In such instances, server 704 may receive first output from client 706 corresponding to data rows 1 and 3 and may receive second output from client 706 corresponding to data rows 2' and 4'. Server 704 may evaluate the second output to determine whether cheating occurred and may evaluate the first output to generate performance metrics for the trainable model (discussed further below at 726). In some embodiments, server 704 first transmits modified data rows 2' and 4' and evaluates the output of client 706 prior to transmitting data rows 1 and 3 so that server 704 can detect whether the trained model of client 706 is cheating prior to transmitting the un-modified data.

At 722, client 706 generates output based on the combined dataset. For example, client 706 may comprises a trained model stored on storage circuitry 608 of client 706. In response to receiving the combined dataset (e.g., a version of merged data' 408 that does not include the source identifiers, the cheating detection modifier, or the labels that the trained model is trying to predict), the trained AI model may generate output. In some embodiments, the output may be a vector having elements which corresponding to a prediction for each sample in the combined dataset. For example, when the trained model is predicting whether an image comprises a male or a female, the output may be a vector with a length equal to the number of samples in the dataset, with each element of the vector having a value between zero and one. Zero may indicate a strong confidence that the image includes a male and one may be a strong confidence that the image comprises a female. In another example, the output may be a vector with elements that indicate a probability that a respective loan applicant has defaulted on a loan.

At 724, server 704 receives the output from client 706. For example, server 704 may receive the output (e.g., the output generated by client 706 at 722) via network 504/616. Client 706 may transmit the output via communications circuitry 614 of client 706 over network 504/616 and the output may be received via communications circuitry 614 of server 502. In some embodiments, client 706 may transmit the output to database 702 in addition to or instead of transmitting the output to server 704.

At 726, server 704 evaluates output and detects cheating. For example, server 704 may retrieve the combined dataset to identify a portion of the output that corresponds to the validation data and may discard a second portion of the output that corresponds to the synthetic data. For example, system 100 may utilize the source identifier of merged data 308/402 or merged data' 408 to identify which rows of the merged data included true data. By corelating the rows which include true data with the rows of the output, system 100 may identify the portion of the output corresponding to the true data. System 100 may generate performance metrics based on the portion of the data corresponding to the validation data (e.g., validation data 302). For example, system 100 may determine how accurate the trained AI network is for the validation data by comparing the labels (e.g., the genders of the individuals in the images) with the gender predictions in the portion of the output. For example, if the portion of the output corresponding to data row two of merged data' 408 is 0.95, system 100 may generate a performance metric of 0.05 for data row two (e.g., based on a deviation of .05 from the value of 1, which represents correct label of female). In some embodiments, server 704 may store the metrics in database 702. In some embodiments, control circuitry 604 may identify an average performance based on the metrics for each data row, for example, control circuitry 604 may sum the performance metric for each data row and then divide by the number of data rows.

In some embodiments, server 704 may compare the metrics against a benchmark and may determine a ranking of the trained model of client 706 based on comparing the metrics to the benchmark. For example, server 704 may generate a benchmark by generating a total overall accuracy of the trained model (e.g., based on the metrics) and may compare the performance of the trained model to overall accuracy of other trained models (e.g., other trained models stored on other clients (e.g., a different client 706). In some embodiments, database 702 stores benchmarking results for each of the trained models validate by server 704.

At 726, server 704, via system 100, may additionally detect cheating in the output (e.g., if a cheating detection modifier was applied to the data at 716). For example, system 100 may determine whether a cheating detection modifier was applied to the combined dataset transmitted at 720 by retrieving the combined dataset from storage circuitry 608 and/or database 702 and determining whether a cheating detection label is present in the combined dataset.

System 100 may detect cheating by identify a second portion of the output that corresponds to the modified subset of the dataset and determining whether the second portion of the output corresponds the predetermined output. For example, system 100 may identify a second portion of the output corresponding to the modified data rows by using the cheat detection label of merged data' 408 and correlating the rows containing cheat detection modifier layer in merged data' 408 with corresponding rows of the output. For example, system 100 may detect cheating by a trainable model by determining if the second and fourth data rows of the output comprise the predefined output. For example, when data rows 2 and 4 of merged data' 408 comprise images modified with a modified intensity for every 20^{th} pixel as described above, the trainable model may predict cheating when the second and fourth data row of the output matches the predefined output (e.g., has a prediction that the image is of a female). For example, if the output corresponding to data rows two and four is .9 (e.g., a strong estimate that the image is of a female), system 100 may determine that the trainable model is cheating the validation by training the trainable model using the merged data (e.g., merged data' 408).

In some embodiments, server 704 may first determine whether any cheating occurred as described above prior to generating the metrics. For example, when system 100 detects that cheating has occurred, system 100 may skip generating the metrics in 726 because the metrics for a trainable model that is cheating are invalid. In some embodiments, server 704 may store an indication that the trainable model of client 706 was cheating (e.g., in database 702)
To avoid overcomplicating the disclosure, only two data rows having modified data are depicted in merged data' 408. However, in some instances, the number of samples in merged dataset (e.g., merged data' 408) is much greater than five (e.g., 100,000) and the number of modified samples is much greater than two (e.g., 25,000). In such embodiments, system 100 may detect cheating by determining whether a threshold percentage of the output corresponds to the predefined output (e.g., when 80% of the output corresponding to modified data rows of merged data' 408 matches the predefined output).

At 728, server 704 either sends metrics at 730 when no cheating is detected or notifies the client of cheating at 732 when cheating is detected. When no cheating is detected, as described above with respect to 726, server 704, via system 100, may transmit (e.g., via network 504/616) the metrics generated at 726. For example, system 100 may transmit to client 706 an overall accuracy of the trained model or a vector indicating the accuracy for each prediction by the trainable model that corresponds to validation data 302. In contrast, when cheating is detected, as described above with respect to 726, server 704, via system 100, may transmit a message to client 706 indicating that cheating was detected by system 100. For example, system 100 may transmit to client 706 via network 504 an indication that cheating was detected in the output provided by client 706 and therefore no metrics are provided and/or generated by server 704.

The sequence discussed above is intended to be illustrative and not limiting. In some embodiments one or more any items in the sequence may be omitted, modified, combined and/or rearranged, and any additional steps may be performed without departing from the scope of the present disclosure. More generally, the above sequence is meant to be exemplary and not limiting.

FIG. 8 shows an additional illustrative sequence, in accordance with some embodiments of the disclosure. Sequence 800 is depicted having database 802, server 804, and client 806. In some embodiments, database 802, server 804, and client 806 correspond to database 702, server 704, and client 706, respectively, of sequence 700 and may perform some, if not all of the functions and processes of database 702, server 704, and client 706. In some embodiments, the hardware of database 802, server 804, and client 806 corresponds to the hardware of database 702, server, 704, and client 706, respectively, of sequence 700, and/or server 502, database 506, and client 508 of system 500.

At 808, client 806 requests validation data from server 804. For example, client 806 may transmit, using communications circuitry 614 of client 806 over network 616, a request to server 804. The request for validation data may include an indication of a trainable model that client 806 is validating. For example, the request may include an indication of what type of validation data is required by the trainable model (e.g., images to predict a gender of a person in the image or loan application data to predict whether there will be a default on the loan).

At 810, server 804 requests a combined dataset from database 802. For example, server 804 may determine that the validation data requested by client 806 has already been generated by server 804 (e.g., via system 100). For example, server 804 may transmit a query to database 802 to determine whether a combined dataset exists for e.g., loan application data. When server 804 determines that such a combined dataset exists, server 804 may request the combined dataset from database 802 (e.g., by transmitting a query over network 504 or by accessing database 802 on storage circuitry 608 that is local to server 804).

At 812, database 802 sends the combined dataset (e.g., merged data 308/402 when no cheating detection is implemented or merged data' 408 when cheating detection is implemented). For example, when database 802 is remote from server 804, database 802 may transmit the combined dataset over network 504 and when database 802 is local to server 804, database may transmit the combined dataset from storage circuitry 608 to processing circuitry 606.

At 814 server 804 sends the combined dataset to client 806. As discussed above with respect to 720 of FIG. 7, server 804 may remove one or more labels from the combined dataset (e.g., merged data 308/402 or merged data' 408) prior to transmitting the combined dataset to client 806. For example, server 804, via system 100, may remove the source and/or cheat detection labels from merged data' 408 prior to transmitting the combined dataset over network 504 to client 806.

At 816, client 806 generates output based on the combined dataset. For example, client 806 may comprise a trained model and may apply the combined dataset through the trained model to generate output, as described above with respect to 722 of FIG. 7.

At 820, client 806 evaluates the output and detects cheating. For example, 802 may evaluate the output by generating metrics (e.g., an overall accuracy of whether loan defaulted or not) based on a first portion of the output from client 806 that corresponds to validation data 302, as described above with respect to 726 of FIG. 7. In some embodiments, server 804 may additionally determine whether cheating occurred by analyzing a second portion of the output corresponding to the modified data rows (e.g., data rows 2' and 4' of merged data' 408) and determining whether the second portion of the output corresponds to the predetermined output (e.g., the output that an applicant will default whenever the income is $123,456), as described above with respect to 726 of FIG. 7.

If server 804 does not detect cheating at 822, server 804 transmits the metrics (e.g., an accuracy of the output) generated at 820 to client 806 (e.g., over network 504), as discussed above with respect to 730 of FIG. 7. If server 804 detects cheating at 822, server 804 notifies client 806 that cheating is detected, as discussed above with respect to 732 of FIG. 7.

The sequence discussed above is intended to be illustrative and not limiting. In some embodiments one or more any items in the sequence may be omitted, modified, combined and/or rearranged, and any additional items may be performed without departing from the scope of the present disclosure. More generally, the above sequence is meant to be exemplary and not limiting.

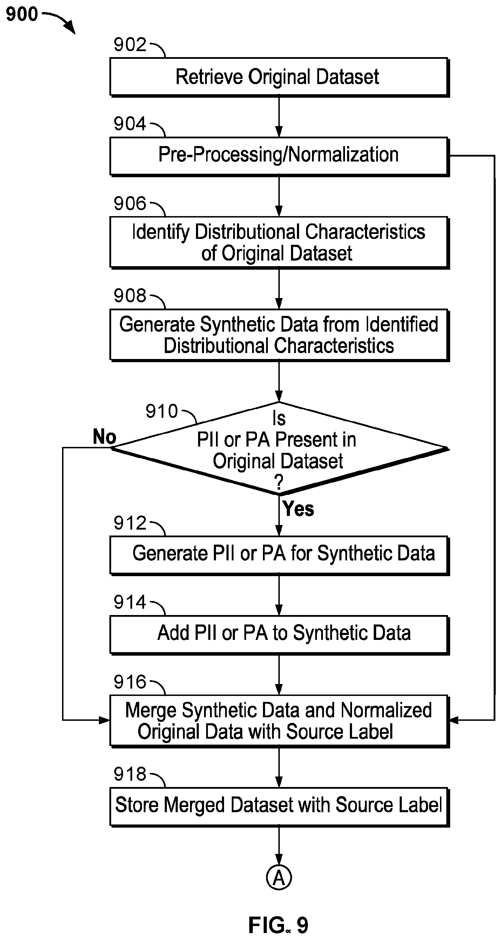

FIG. 9 is an illustrative flow chart of process 900 for generating synthetic data based on real data, in accordance with some embodiments of the disclosure. For example, system 100 implementing process 900 may be encoded onto non-transitory storage medium (e.g., storage 608) as a set of instructions to be decoded and executed by processing circuitry (e.g., processing circuitry 606). Processing circuitry may, in turn, provide instructions to other sub-circuits contained within control circuitry 604. It should be noted that process 900, or any step thereof, could be performed on, or provided by, any of the devices shown in FIGS. 5-8.

Process 900 begins at 902, where system 100 running on control circuitry 604 retrieves an original dataset. For example, control circuitry 604 may retrieve validation data 302 from database 506 (e.g., on storage circuitry 608, when stored locally, or via network 504, when stored remote to control circuitry 604).

At 904, control circuitry 604 performs pre-processing and normalization of the original dataset. For example, when the dataset comprises images, control circuitry 604 may resize the image, may standardize the pixel data for each of the images so that each of the pixel values in the image is between 0 and 1, may apply image centering so that the mean pixel value is zero, or may apply any other normalization or pre-processing technique so that all data is in a standardized format for inputting to a model.

At 906, control circuitry 604 identifies distributional characteristics of the original dataset (e.g., validation data 302). For example, control circuitry 604 learns the characteristics of a loan application that make it likely that the loan will default in the future or learns the characteristics of a face that are typically associated with males and females. In some embodiments, control circuitry 604 may apply the techniques described above with respect to FIGS 1 and 2 for identifying the distributional characteristics of the original dataset (e.g., validation data 302).

At 908, control circuitry 604 generates synthetic data from the identified distributional characteristics. For example, control circuitry 604 may generate a noise vector based on pseudo-random number generator and may input the noise vector into a trainable model generated at 906. Because the trainable model learned the distributional characteristics of the validation data, the trainable model can use the noise vector (e.g., a compressed representation of data) and may generate a reconstructed data (e.g., synthetic data 304) that closely approximates the distributional characteristics of the original dataset (e.g., validation data 302). For example, control circuitry 604 may generate an image of a synthetic person based on a noise vector or may generate a synthetic loan application based on the noise vector.

At 910, control circuitry 604 determines whether personally identifiable information (e.g., a name or phone number) or protected attributes (e.g., race, religion, national origin, gender, marital status, age, and socioeconomic status) are present in the original dataset. If control circuitry 604 determines that PA or PII is present in the original dataset, control circuitry 604 proceeds to 912 where control circuitry 604 generates PII or PA for the synthetic data and adds the PII or PA to the synthetic data at 914. For example, if control circuitry 604 determines that a gender is associated with a loan application, control circuitry 604 may pseudo randomly add a gender to the synthetic loan application.

At 916, control circuitry 604 merged the synthetic data and normalized original data with a source label. For example, control circuitry 604 may merge synthetic data 304 with validation data 302, as described above with respect to FIG. 3, to create merged data 308. Merged data 308 may contain a source label to identify whether a respective data row is from the synthetic data or from the validation data (e.g., so that control circuitry 604 may later correlate output from a trained model to validation data or synthetic data).

At 918, control circuitry 604 stores the merged dataset with the source label. For example, control circuitry 604 may transmit the merged data 308 over network 504 to database 506 for storage on storage circuitry 608 of database 506. In another example, control circuitry 604 may store merged data 308 locally on storage circuitry 608. In some embodiments, control circuitry 604 stores the merged data both locally and remotely (e.g., on a database that is located remote to control circuitry 604 and on a database that located on storage circuitry 608 that is local to control circuitry 604).

It is contemplated that the steps or descriptions of FIG. 9 may be used with any other embodiment of this disclosure. In addition, the descriptions described in relation to the algorithm of FIG. 9 may be done in alternative orders or in parallel to further the purposes of this disclosure.

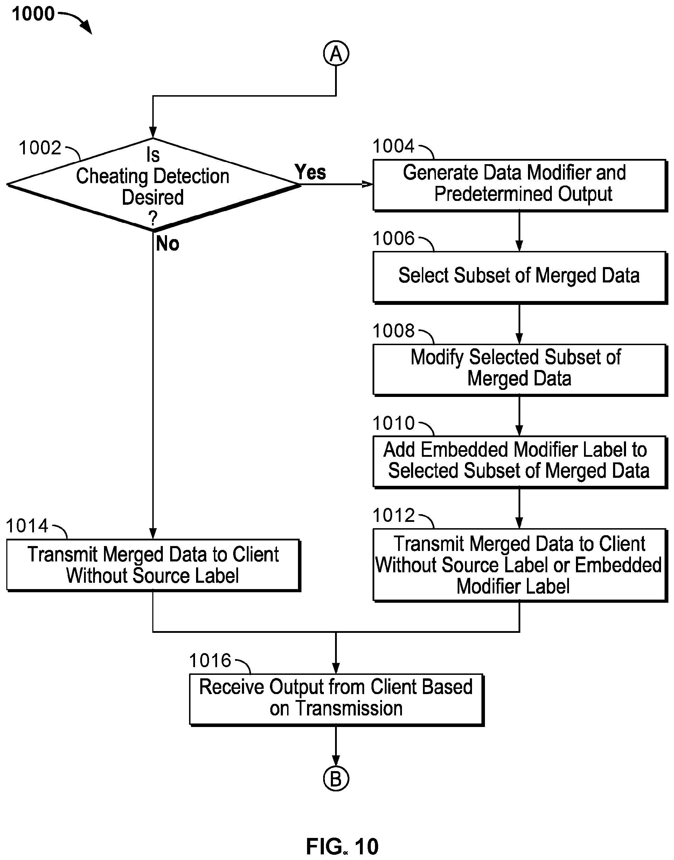

FIG. 10 is an illustrative flow chart of process 1000 for providing a cheating detection mechanism in a dataset, in accordance with some embodiments of the disclosure. For example, system 100 implementing process 1000 may be encoded onto non-transitory storage medium (e.g., storage 608) as a set of instructions to be decoded and executed by processing circuitry (e.g., processing circuitry 606). Processing circuitry may, in turn, provide instructions to other sub-circuits contained within control circuitry 604. It should be noted that process 1000, or any step thereof, could be performed on, or provided by, any of the devices shown in FIGS. 5-8.

Process 1000 begins at 1002 where control circuitry 604 determines whether cheating detection is desired for the combined dataset. For example, control circuitry 604 may determine whether the combined dataset is to be used for a benchmarking process, and if the combined dataset is to be used for benchmarking, control circuitry 604 may apply a cheating detection to the combined dataset. By applying cheating detection to the combined dataset when the dataset is used for benchmarking, it ensures that the multiple clients that are using the combined dataset for benchmarking are developing fair algorithms that do not simply overfit to the validation data, but perform poorly using other real world data. When control circuitry 604 determines that cheating detection is desired, control circuitry 604 proceeds to 1004 where control circuitry 604 generates a data modifier to detect cheating.

In some embodiments, control circuitry 604 may not apply the cheating detection when the combined dataset is going to be used only by a single client or when the dataset was provided at least in part by the client. If control circuitry 604 determines that no cheating detection is desired, control circuitry 604 proceeds to 1014, where control circuitry 604 transmits the merged data to a client without the source label. For example, control circuitry 604 may remove the source label which indicates whether the data is real or fake from merged data 308 and may then transmit merged data 308 (without the source label) to client 508 over network 504. By removing the source label prior to transmitting the data over network 504, control circuitry 604 makes it difficult for a malicious party to intercept the merged data and determine which data is real and which data is fake. Because the fake data outnumbers the real data by a large margin (e.g., 100 times) and because the distributional characteristics of the fake data match the distributional characteristics of the real data (e.g., validation data 302), the real data is protected from being identified by the malicious party.

At 1004, control circuitry 604 generates a data modifier and predetermined output to detect cheating. For example, control circuitry 604 may identify a data modifier based on a data type of the merged data. For example, when the merged data comprises an image, control circuitry 604 may modify every 20^{th} pixel of the image to be at a highest intensity, when the merged data comprises a values, control circuitry 604 may modify the values to all be equal (e.g., control circuitry 604 may set all income levels on modified loan applications to $123,456). Control circuitry 604 may correlate samples that have been modified with a predetermined output (e.g., Female when every 20^{th} pixel of the image is at a highest intensity, or with default when the income is $123,456). Control circuitry 604 may correlate the samples with the predetermined output by changing an attribute of the sample (e.g., a label) to be the predetermined output (e.g., female or default), as discussed above with respect to FIG. 4.

At 1006, control circuitry 604 selects a subset of the merged data to modify with the modifier selected at 1004. For example, control circuitry 604 may identify a number of data rows to modify from the merged data based on a number of data rows in the merged data. For example, control circuitry 604 may modify 1,000 samples of the merged data when the merged data comprises 1,000 samples and may modify 10,000 samples of the merged data when the merged data comprises 100,000 samples. Control circuitry 604 may select a subset of the merged data (e.g., merged data 308/402) where the subset contains the selected number of samples (e.g., 1,000 or 10,000). Control circuitry 604 may apply a pseudo-random algorithm to select which data rows are included in the selected subset. In some embodiments, control circuitry 604 may only modify samples that are sourced from the validation data (e.g., validation data 302). In some embodiments, control circuitry 604 may only modify samples that are sourced from the synthetic data (e.g., synthetic data 304).

At 1008, control circuitry 604 modifies the selected subset of merged data with the data modifier and the predetermined output. For example, when data rows 2 and 4 of merged data 402 are selected, control circuitry 604 may modify data rows 2 and 4 by applying the data modifier to create data rows 2' and 4' of merged data' 408, as discussed above with respect to FIG. 4. For example, control circuitry 604 may change images associated with data rows 2 and 4 of merged data 402 so that every 20^{th} pixel of the image to be at a highest intensity and that the label female is associated with both of the modified rows.

At 1010, control circuitry 604 adds a cheat detection label to the selected subset of merged data. For example, control circuitry 604 may add a label rows in merged data' 408 to indicate whether the data was modified based on the embedded modifier and the predetermined output so that control circuitry 604 can later determine whether cheating has occurred when evaluating output from a trained model (e.g., trained machine learning model).

At 1012, control circuitry 604 transmits the merged data to a client without the source label or the cheat detection label. For example, control circuitry 604 may remove the label indicating whether the data is from the validation data or synthetic data and whether the data includes a cheating detection mechanism so that the trained model, or any intervening party, cannot capture merged data and identify the validation data. Control circuitry 604 may transmit the merged data to client 508 via communications circuitry 614 over network 616/504.

At 1016, control circuitry 604 receives output from the client. For example, control circuitry 604 may receive (e.g., via communications circuitry 614 over network 504/616 output from client 508 generated based on the trained model stored at client 508. In some embodiments, control circuitry 604 may store the output locally (e.g., on storage circuitry 608) and/or on a database remote from control circuitry 604 (e.g., on database 506 communicatively coupled to control circuitry 604 via network 604/616).

It is contemplated that the steps or descriptions of FIG. 10 may be used with any other embodiment of this disclosure. In addition, the descriptions described in relation to the algorithm of FIG. 10 may be done in alternative orders or in parallel to further the purposes of this disclosure.

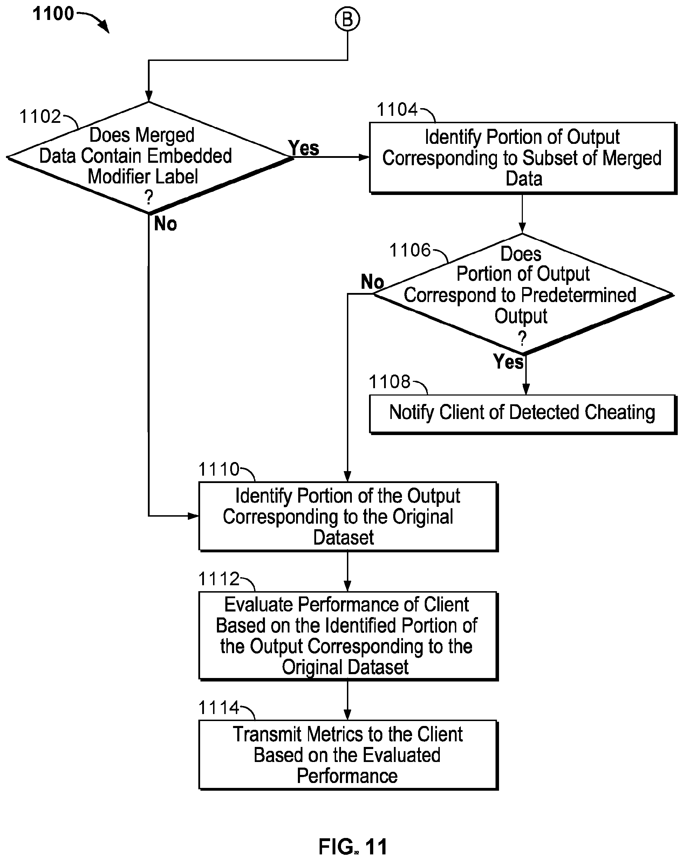

FIG. 11 is an illustrative flow chart of process 1100 for evaluating output from a trained artificial intelligence model, in accordance with some embodiments of the disclosure. For example, system 100 implementing process 1100 may be encoded onto non-transitory storage medium (e.g., storage 608) as a set of instructions to be decoded and executed by processing circuitry (e.g., processing circuitry 606). Processing circuitry may, in turn, provide instructions to other sub-circuits contained within control circuitry 604. It should be noted that process 1100, or any step thereof, could be performed on, or provided by, any of the devices shown in FIGS. 5-8.

Process 1100 begins at 1102 where control circuitry 604 determines whether the merged data contains a cheat detection label. For example, control circuitry 604 may retrieve the merged data (e.g., merged data 308/402 or merged data' 408) from storage circuitry 608 or database 506. Based on the retrieved merged data, control circuitry 604 may determine whether the merged data comprised a label indicating that the data was modified (e.g., by system 100) to include a cheating detection. For example, when control circuitry 604 retrieves merged data 308/402, control circuitry 604 may determine that no cheating detection label is present and proceeds to 1110. If control circuitry 604 retrieves merged data' 408 control circuitry 604 may determine that the data was modified for cheating detection and proceeds to 1104.

At 1104, control circuitry 604 identifies a portion of the output corresponding to the subset of merged data. For example, control circuitry 604 identifies the portion of the output corresponding to the modified data rows 2' and 4' of merged data' 408. At 1106, control circuitry 604 determines whether the portion of the output corresponds to the predetermined output (e.g., female for the image example or default for the loan application example). For example, control circuitry 604 may determine whether the portion of the output contains a prediction of a female or a loan default. When control circuitry 604 determines that the portion of the output corresponds to the predetermined output (e.g., because over a threshold portion of the portion of the output predicted female for the modified images), control circuitry 604 notifies the client of the detected cheating at 1108. For example, control circuitry 604 may transmit a notification via communications circuitry 614 over network 504/616 to client 508 indicating that cheating was detected by system 100.

When control circuitry 604 determines that the portion of the output does not correspond to the predetermined output, control circuitry 604 proceeds to 1110 where control circuitry 604 identifies a portion of the output corresponding to the original dataset. For example, based on the source labels of merged data 308/402 or merged data' 408, control circuitry 604 may identify the portion of the output that corresponds to data rows that originate from the validation dataset (e.g., validation data 302).

At 1112, control circuitry 604 evaluates the performance of the client based on the identified portion of the output corresponding to the original dataset. For example, control circuitry 604 may determine, based on the portion of the output corresponding to validation data 302, whether the trainable model of client 508 accurately predicted the labels for validation data 302 (e.g., whether the model accurately classified images having males or females or accurately determined whether the loans experienced a default based on the application data. In some embodiments control circuitry 604 generates metrics for the output as described above with respect to FIGS. 7 and 8.

At 1114, control circuitry 604 transmits metrics to the client based on the evaluated performance. For example, control circuitry 604 may transmit the performance metrics for each data row or may compute an average accuracy of the trained model and may transmit the metrics to client 508 over network 504/616 (e.g., via communications circuitry 614). In some embodiments, control circuitry 604 may compare the performance metrics against and benchmark and may transmit second performance metrics to client 508 indicating performance relative to the benchmark. For example, control circuitry 604 may determine how accurate the trained model of client 508 is when compared to the accuracy of other trained models from other clients when using the same validation data (e.g., validation data 302).

It is contemplated that the steps or descriptions of FIG. 11 may be used with any other embodiment of this disclosure. In addition, the descriptions described in relation to the algorithm of FIG. 11 may be done in alternative orders or in parallel to further the purposes of this disclosure.

The processes discussed above are intended to be illustrative and not limiting. Any portion of the processes discussed herein may be omitted, modified, combined and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, sequence diagrams, flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

This specification discloses embodiments which include, but are not limited to, the following:
1. A method for protecting a dataset, the method comprising:
   retrieving a first dataset;
   identifying first distributional characteristics of the first dataset;
   generating, based on the first distributional characteristics, a second dataset;
   generating a combined dataset based on the first dataset and on the second dataset;
   transmitting, over a network, the combined dataset as an input to a trained machine learning model;
   receiving over the network output from the trained machine learning model that was generated based on the combined dataset input; and
   identifying a portion of the output corresponding to the first dataset.
2. The method of item 1, further comprising:
   determining whether the first dataset comprises personal identifiable information; and
   in response to determining that the first dataset comprises personal identifiable information:
      pseudo randomly generating a set of personal identifiable information; and
      assigning the set of pseudo randomly generated personal identifiable information to the second dataset.
3. The method of item 1, wherein identifying the first distributional characteristics of the first dataset comprises:
   retrieving a neural network comprising a plurality of nodes, wherein each node is connected to at least one other node;
   training the neural network using at least a subset of the first dataset by assigning weights to connections between the plurality of nodes; and
   determining the first distributional characteristics of the first dataset based on the assigned weights.
4. The method of item 1, wherein a first number of samples in the first dataset is smaller than a second number of samples in the second dataset.
5. The method of item 1, wherein generating the combined dataset further comprises:
   interleaving a first plurality of samples in the first dataset among a second plurality of samples in the second dataset;
   assigning a first source identifier to each of the first plurality of samples; and
   assigning a second source identifier to each of the first plurality of samples, wherein identifying the portion of the output corresponding to the first dataset comprises identifying the portion of the output corresponding to the first dataset based on the first source identifier and on the second source identifier.
6. The method of item 1, wherein the output from the trained machine learning model is first output from the trained machine learning model, further comprising:
   modifying a subset of the first dataset based on a predefined modifier;
   associating the subset of the first dataset with a predetermined output;
   transmitting, over the network, the modified subset of the first dataset as input to the trained machine learning model;
   receiving, over the network, second output from the trained machine learning model that was generated based on the subset of the first dataset; and
   detecting cheating by the trained machine learning model when the second output matches the predetermined output.
7. The method of item 1, wherein the first dataset comprises a plurality of samples, and wherein each sample of the plurality of samples is associated with a plurality of attributes.
8. The method of item 1, further comprising determining a performance metric of the trained machine learning model based on the portion of the output corresponding to the first dataset.
9. A system for protecting a dataset, the system comprising:
   communications circuitry;
   storage circuitry, configured to store a first dataset; and
   control circuitry configured to:
      retrieving the first dataset from the storage circuitry;
      identifying first distributional characteristics of the first dataset;
      generating, based on the first distributional characteristics, a second dataset;
      generating a combined dataset based on the first dataset and on the second dataset;
      transmitting, over a network using the communications circuitry, the combined dataset as an input to a trained machine learning model;
      receiving over the network, using the communications circuitry, output from the trained machine learning model that was generated based on the combined dataset input; and
      identifying a portion of the output corresponding to the first dataset.
10. The system of item 9, wherein the control circuitry is further configured to:
   determine whether the first dataset comprises personal identifiable information; and
   in response to determining that the first dataset comprises personal identifiable information:
      pseudo randomly generate a set of personal identifiable information; and
      assign the set of pseudo randomly generated personal identifiable information to the second dataset.
11. The system of item 9, wherein identifying the first distributional characteristics of the first dataset comprises:
   retrieving a neural network comprising a plurality of nodes, wherein each node is connected to at least one other node;
   training the neural network using at least a subset of the first dataset by assigning weights to connections between the plurality of nodes; and
   determining the first distributional characteristics of the first dataset based on the assigned weights.
12. The system of item 9, wherein a first number of samples in the first dataset is smaller than a second number of samples in the second dataset.
13. The system of item 9, wherein the control circuitry is further configured, when generating the combined dataset, to:
   interleave a first plurality of samples in the first dataset among a second plurality of samples in the second dataset;
   assign a first source identifier to each of the first plurality of samples; and
   assign a second source identifier to each of the first plurality of samples, wherein identifying the portion of the output corresponding to the first dataset comprises identifying the portion of the output corresponding to the first dataset based on the first source identifier and on the second source identifier.
14. The system of item 9, wherein the output from the trained machine learning model is first output from the trained machine learning model, and wherein the control circuitry is further configured to:
   modify a subset of the first dataset based on a predefined modifier;
   associate the subset of the first dataset with a predetermined output;
   transmit, over the network using the communications circuitry, the modified subset of the first dataset as input to the trained machine learning model;
   receiving, over the network using the communications circuitry, second output from the trained machine learning model that was generated based on the subset of the first dataset; and
   detecting cheating by the trained machine learning model when the second output matches the predetermined output.
15. The system of item 9, wherein the control circuitry is further configured to determine a performance metric of the trained machine learning model based on the portion of the output corresponding to the first dataset.

## Claims

1. A method for protecting a dataset, the method comprising:
receiving a request for validation of a trained machine learning model from a client;
based on receiving the request, retrieving a combined dataset from a database, wherein the combined dataset comprises samples from a validation dataset interleaved with synthetic data generated based off of the validation dataset;
transmitting the combined dataset to the client;
receiving, based on the transmitting, an output from the client, wherein the output is generated based on applying the combined dataset as input to the trained machine learning model;
identifying a first portion of the output that corresponds to the synthetic data;
determining whether the first portion of the output corresponds to a predetermined output;
in response to determining that the first portion of the output corresponds to the predetermined output, notifying the client of cheating; and
in response to determining that the first portion of the output does not corresponds to the predetermined output:
computing performance metrics for the trained machine learning model based on a second portion of the output that corresponds to the validation dataset; and
transmitting the performance metrics to the client.

2. The method of claim 1, further comprising generating the synthetic data based on:
identifying first distributional characteristics of the validation dataset; and
generating, based on the first distributional characteristics, the synthetic data.

3. The method of claim 2, wherein generating the synthetic data further comprises associating the synthetic data with the predetermined output.

4. The method of claim 1, wherein the combined dataset comprises source identifiers, further comprising removing the source identifiers prior to transmitting the combined dataset to the client.

5. The method of claim 1, further comprising applying a normalization scheme to the combined dataset prior to transmitting the combined dataset to the client.

6. A system for protecting a dataset, the system comprising:
network circuitry; and
control circuitry configured to:
receive, via the network circuitry, a request for validation of a trained machine learning model from a client;
based on receiving the request, retrieving a combined dataset from a database, wherein the combined dataset comprises samples from a validation dataset interleaved with synthetic data generated based off of the validation dataset;
transmit, via the network circuitry, the combined dataset to the client;
receive, based on the transmitting, an output from the client, wherein the output is generated based on applying the combined dataset as input to the trained machine learning model;
identify a first portion of the output that corresponds to the synthetic data;
determine whether the first portion of the output corresponds to a predetermined output;
in response to determining that the first portion of the output corresponds to the predetermined output, notify the client of cheating via the network circuitry; and
in response to determining that the first portion of the output does not corresponds to the predetermined output:
compute performance metrics for the trained machine learning model based on a second portion of the output that corresponds to the validation dataset; and
transmit, via the network circuitry, the performance metrics to the client.

7. The system of claim 6, wherein the circuitry is further configured to generate the synthetic data based on:
identifying first distributional characteristics of the validation dataset; and
generating, based on the first distributional characteristics, the synthetic data.

8. The system of claim 7, wherein the control circuitry is further configured, when generating the synthetic data, to associate the synthetic data with the predetermined output.

9. The system of claim 6, wherein the combined dataset comprises source identifiers, and wherein the control circuitry is further configured to remove the source identifiers prior to transmitting the combined dataset to the client via the network circuitry.

10. The system of claim 6, wherein the control circuitry is further configured to apply a normalization scheme to the combined dataset prior to transmitting the combined dataset to the client.
